(19) **Europäisches Patentamt**
European Patent Office
Office européen des brevets

(11) **EP 2 936 961 B1**

(12) **EUROPÄISCHE PATENTSCHRIFT**

(45) Veröffentlichungstag und Bekanntmachung des Hinweises auf die Patenterteilung:
**15.08.2018 Patentblatt 2018/33**

(51) Int Cl.:
***A01D 41/12*** *(2006.01)*

(21) Anmeldenummer: **15153953.3**

(22) Anmeldetag: **05.02.2015**

(54) **Fahrzeug mit Streugutverteilvorrichtung**

Vehicle with spread goods distribution device

Véhicule doté d'un dispositif d'épandage

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.04.2014 DE 102014005905**

(43) Veröffentlichungstag der Anmeldung:
**28.10.2015 Patentblatt 2015/44**

(73) Patentinhaber: **CLAAS Selbstfahrende Erntemaschinen GmbH**
**33428 Harsewinkel (DE)**

(72) Erfinder:
• **Beulke, Christian**
**33428 Harsewinkel (DE)**
• **Brinkmann, Jörn**
**33428 Harsewinkel (DE)**
• **Ducrée, Dirk**
**59939 Olsberg (DE)**

(56) Entgegenhaltungen:
**EP-A1- 1 570 726     EP-A2- 2 382 853**
**DE-A1- 10 342 922**

EP 2 936 961 B1

**Beschreibung**

Die vorliegende Erfindung betrifft ein Fahrzeug mit einer Aufnahmeeinrichtung für Erntegut von einer Feldfläche, einer Verarbeitungsstrecke, in der Streugut von dem Erntegut abgeschieden wird, und einer Verteileinrichtung zum Ausstoßen des Streuguts auf die Feldfläche. Typischerweise ist ein solches Fahrzeug ein Mähdrescher, und die Verarbeitungsstrecke umfasst ein Dreschwerk, in welchem der Kornanteil des Ernteguts vom Nichtkornanteil geschieden wird, um gespeichert zu werden, während der Nichtkornanteil fortlaufend auf die abgeerntete Feldfläche verstreut wird und dabei einen Streifen entlang des von dem Mähdrescher gefahrenen Weges bildet. Der verstreute Nichtkornanteil, hier auch als Streugut bezeichnet, kann untergepflügt werden, oder er kann auf der Feldfläche liegen bleiben, um eine Mulchschicht zu bilden. In beiden Fällen sollte er möglichst gleichmäßig über die Feldfläche verteilt sein. Dafür muss die Breite des vom Streugut gebildeten Streifens möglichst exakt mit der Arbeitsbreite der Aufnahmeeinrichtung übereinstimmen.

Aus DE 103 42 922 A1 ist ein Fahrzeug der eingangs genannten Art bekannt, nämlich ein Mähdrescher, an dessen Heck als Verteileinrichtung zwei Wurfgebläse mit verstellbarer Wurfrichtung angebracht sind. Indem die Wurfrichtung ständig in einem verstellbaren Winkelbereich hin und her pendelt, wird ein Streugutstreifen erzeugt, dessen Breite einerseits durch die Größe dieses Winkelbereichs und andererseits durch die Flugweite des Streuguts bestimmt ist. Eine Steuereinheit ist mit einem Sensor zum Erfassen der Arbeitsbreite der an dem Mähdrescher montierten Aufnahmeeinrichtung verbunden, um die Größe dieses Winkelbereichs an die erfasste Arbeitsbreite anzupassen.

Um eine Feldfläche abzuernten, wird ein solcher Mähdrescher meist in Längsrichtung der Feldfläche hin- und hergefahren, wobei bei jeder Überfahrung der Feldfläche eine Kante der Aufnahmevorrichtung möglichst genau an einer Bestandskante entlang geführt wird, um die Breite der Aufnahmevorrichtung voll auszunutzen und einen Streifen in der Breite der Aufnahmeeinrichtung abzumähen. Da die Breite der Feldfläche und die der Aufnahmeeinrichtung im Allgemeinen nicht aneinander angepasst sind, hat zumindest bei der letzten Überfahrung der Feldfläche der dann noch abzumähende Reststreifen eine kleinere Breite als die Aufnahmeeinrichtung, so dass, wenn der Betrieb der Verteileinrichtung nicht an die geringe Breite des Reststreifens angepasst wird, der beim Mähen des Reststreifens erzeugte Streugutstreifen breiter als der Reststreifen ist und sich über den Rand der Feldfläche hinaus oder auf bereits bei einer früheren Überfahrung abgemähte Teile der Feldfläche erstreckt. Wenn die Feldfläche nicht rechteckig ist, dann ist die Breite des Reststreifens nicht konstant, so dass, um einen mit dem Reststreifen deckungsgleichen Streugutstreifen zu erhalten, Betriebsparameter der Verteileinrichtung im Laufe einer Überfahrung angepasst werden müssen. Dies ist für den Fahrer so mühsam, dass es meist unterbleibt und eine ungleichmäßige Verteilung des Streuguts oder eine Verschmutzung von benachbarten Feldflächen oder von Verkehrswegen durch das Streugut in Kauf genommen wird. Wenn der Reststreifen schmaler als die Aufnahmeeinrichtung ist, ergibt sich für den Fahrer ferner das Problem, dass die Bestandskanten des Reststreifens den vom Mähdrescher zu fahrenden Weg nicht eindeutig festlegen. Wenn der Mähdrescher sich während des Aberntens des Reststreifens quer zum Reststreifen bewegt, so dass das Erntegut nicht immer von demselben Teil der Aufnahmeeinrichtung aufgenommen wird, dann bewegt sich auch der Streugutstreifen, und seine Überlappung mit dem Reststreifen ist schlecht.

Die Druckschrift EP 2 382 853 A1 offenbart einen Mähdrescher mit einer Steuereinrichtung, die dazu eingerichtet ist, eine Streugutverteilung anhand von Sensorsignalen eines Positionssensors, insbesondere eines GPS-Sensor, zu steuern. Dadurch kann die Streugutverteilung auf den unmittelbar zuvor abgeernteten Teils des Feldes beschränkt werden.

Aufgabe der vorliegenden Erfindung ist, ein alternatives Fahrzeug der eingangs angegebenen Art zu schaffen, das ein gleichmäßiges Verteilen des Streuguts beim Abernten eines Reststreifens erleichtert.

Die Aufgabe wird gelöst, indem bei einem Fahrzeug mit einer Aufnahmeeinrichtung für Erntegut und einer Verteileinrichtung zum Verteilen eines von dem Erntegut abgeschiedenen Streugutes während der Fahrt in Form eines Streugutstreifens hinter dem Fahrzeug die Verteileinrichtung steuerbar ist, um die Lage des Streugutstreifens quer zur Fahrtrichtung zu variieren, ein Erfassungsmittel zum Erfassen der Verteilung des Ernteguts über die Breite der Aufnahmeeinrichtung vorgesehen ist und eine Steuereinheit eingerichtet ist, die Lage des Streugutstreifens anhand der erfassten Verteilung zu steuern.

Das Erfassungsmittel kann eingerichtet sein, die Verteilung des Ernteguts in der Aufnahmeeinrichtung zu überwachen und anhand der Ergebnisse dieser Überwachung die Verteileinrichtung zu steuern; insbesondere kann es eingerichtet sein, eine Ungleichverteilung des Ernteguts zwischen einer linken und einer rechten Hälfte der Aufnahmeeinrichtung zu erfassen, so dass die Steuereinheit im Falle einer Ungleichverteilung den Streugutstreifen von einer bei Gleichverteilung eingenommenen Position zur Seite der stärker mit Erntegut belasteten Hälfte auslenken kann.

Anhand der Ungleichverteilung des Ernteguts in der Aufnahmeeinrichtung kann zwar mit Gewissheit unterschieden werden, ob das Fahrzeug den Reststreifen mittig, nach links oder nach rechts versetzt anfährt; wie groß der Versatz ist, kann nicht ohne weiteres gefolgert werden. Einer einfachen Ausgestaltung zufolge ist es ausreichend, dass die Steuereinheit eingerichtet ist, die Position des Streugutstreifens zwischen drei diskreten Positionen, der bei Gleichverteilung eingenommenen Position und je einer zur linken bzw. zur rechten Seite versetzten Position auszuwählen. So kann eine automatische Anpassung zumindest an diejenigen praktisch relevanten Fälle erfolgen, dass der Fahrer den Reststreifen mittig anfährt, dass er mit der rechten Kante der Aufnahmeeinrichtung an der rechten Bestandskante des Reststreifens entlangfährt bzw. dass er mit der linken Kante der Aufnahmeeinrichtung an der linken Bestandskante des Reststreifens entlangfährt.

Wenn die Steuereinheit eingerichtet ist, die Ungleichverteilung des Ernteguts quantitativ zu beurteilen, dann kann sie zweckmäßigerweise auch in Abhängigkeit vom Maß der Ungleichverteilung eine kontinuierlich variable Position des Streugutstreifens wählen.

Zumindest dann, wenn das Erfassungsmittel nicht in der Lage ist, die Breite des Reststreifens zu beurteilen, sollte die Steuereinheit eingerichtet sein, die Position des Streugutstreifens quer zum Fahrzeug unter Beibehaltung seiner Breite zu variieren.

Einer zweckmäßigen Ausgestaltung zufolge, die nicht Gegenstand der vorliegend beanspruchten Erfindung ist, ist die Aufnahmeeinrichtung in an sich bekannter Weise mittels eines linken und eines rechten Stellglieds höhenverstellbar. Das Erfassungsmittel kann dann an den Stellgliedern angeordnete Sensoren aufweisen, die die Belastung der Stellglieder durch das gemeinsame Gewicht der Aufnahmeeinrichtung und des darin befindlichen Ernteguts erfassen. Wenn die Stellglieder Hydraulikzylinder sind, können diese Sensoren insbesondere Drucksensoren sein, die angeordnet sind, um den Druck in einer Arbeitskammer eines dieser Hydraulikzylinder zu erfassen, wobei ein Druckungleichgewicht zwischen den Sensoren auf eine Ungleichverteilung des Ernteguts zwischen linker und rechter Hälfte der Aufnahmeeinrichtung schließen lässt.

Erfindungsgemäß umfasst das Erfassungsmittel eine auf die Aufnahmeeinrichtung oder Erntegut vor der Aufnahmeeinrichtung ausgerichtete Kamera. Aus den Bildern einer solchen Kamera kann die Steuereinheit die Lage von Bestandskanten des Reststreifens relativ zur Aufnahmeeinrichtung quantitativ erfassen und wenigstens die Lage des Streugutstreifens relativ zum Fahrzeug, vorzugsweise auch die Breite des Streugutstreifens, so zu steuern, dass der Streugutstreifen gut mit dem Reststreifen fluchtet.

Dazu sollte die Steuereinheit in der Lage sein, wenigstens eine nicht mit einer Kante der Aufnahmeeinrichtung zusammenfallende Bestandskante des Ernteguts in von der Kamera gelieferten Bildern zu identifizieren und einen Rand des Streugutstreifens fluchtend mit dieser Bestandskante zu positionieren.

Einer weiteren Alternative zufolge, die nicht Gegenstand der vorliegend beanspruchten Erfindung ist, kann das Erfassungsmittel einen Navigationssignalempfänger und Rechenmittel zum Berechnen der Breite eines noch unbearbeiteten Reststreifens des Ernteguts anhand von Daten des Navigationssignalempfängers aufweisen.

Die berechnete Breite des Reststreifens kann genutzt werden, um die Breite des Streugutstreifens übereinstimmend einzustellen.

Wenn die Steuereinheit eingerichtet ist, die Position der Bestandskanten des Reststreifens relativ zum Fahrzeug anhand einer vom Navigationssignalempfänger ermittelten Position des Fahrzeugs abzuschätzen, dann kann sie die Ränder des Streugutstreifens fluchtend mit den Bestandskanten positionieren, ohne dafür die Kamera oder andere Erfassungsmittel zu benötigen.

Weitere Merkmale und Vorteile der Erfindung ergeben sich aus der nachfolgenden Beschreibung von Ausführungsbeispielen unter Bezugnahme auf die beigefügten Figuren. Es zeigen:

Fig. 1    einen Mähdrescher als Beispiel eines erfindungsgemäßen Fahrzeugs;
Fig. 2    eine schematische Draufsicht auf eine Verteileinrichtung des Mähdreschers;
Fig. 3    eine schematische Draufsicht auf eine alternative Verteileinrichtung;
Fig. 4    eine schematische Draufsicht auf den Mähdrescher im Feldeinsatz;
Fig. 5    eine schematische Draufsicht auf den Mähdrescher beim Übergang in Kurvenfahrt;
Fig. 6    eine Draufsicht auf den Mähdrescher während des Fahrens einer Kurve;
Fig. 7    eine Draufsicht auf den Mähdrescher während des Mähens eines Feldrandstreifens; und
Fig. 8    eine zweite Draufsicht auf den Mähdrescher während des Mähens eines Feldrandstreifens.

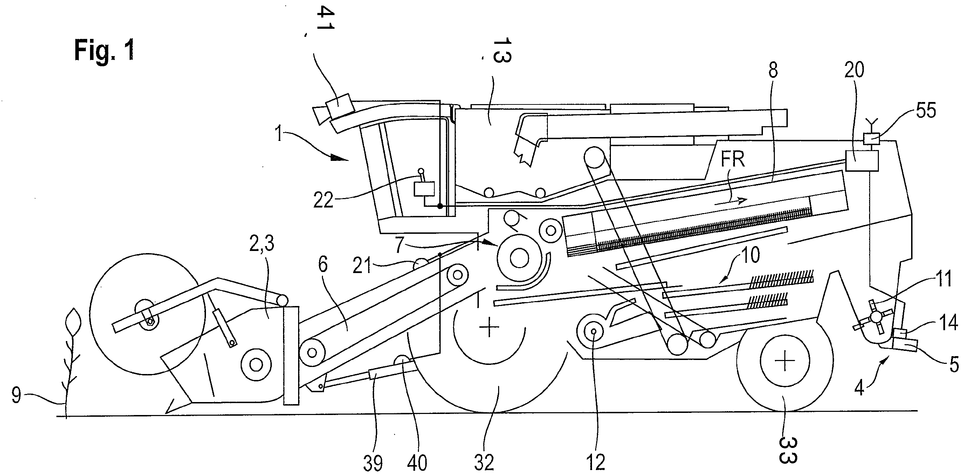

Der in Fig. 1 schematisch dargestellte Mähdrescher 1 hat als Aufnahmeeinrichtung 2 zum Aufnehmen von Erntegut 9 von einer Feldfläche ein Schneidwerk 3, und als Verteileinrichtung 4 an seinem Heck zwei nebeneinander angeordnete Wurfgebläse 5. Eine Verarbeitungsstrecke, die sich vom Schneidwerk 3 zur Verteileinrichtung 4 erstreckt, umfasst einen Schrägförderer 6, eine Drescheinrichtung 7, einen Axialabscheider 8, eine Reinigungseinrichtung 10 und einen Häcksler 11.

Die Höhe des Schneidwerks 3 ist mit Hilfe von zwei Hydraulikzylindern 39 einstellbar, die unter einer rechten bzw. einer linken Flanke des Schrägförderers 6 angeordnet sind und einerseits am Fahrgestell des Mähdreschers 1, andererseits an ein vorderes Ende des Schrägförderers 6 angelenkt sind. An jeden Hydraulikzylinder 39 ist ein Drucksensor 40 zum Erfassen des Öldrucks in einer Arbeitskammer des Hydraulikzylinders 39 angeschlossen. Der Axialabscheider 8 empfängt ein Korn-Kurzstrohgemisch von der Drescheinrichtung 7 und zerlegt dieses in Stroh, das am Ende des Axialabscheiders 8 austritt und dem Häcksler 11 zugeführt wird, sowie einen im Wesentlichen Korn- und Ährenbruchstücke enthaltenden Strom, der zur Reinigungseinrichtung 10 gelangt. Nichtkornbestandteile dieses Stroms werden in der Reinigungseinrichtung 10 vom Luftstrom eines Gebläses 12 mitgerissen und gelangen über den Häcksler 11 zur Verteileinrichtung 4, während das von Verunreinigungen befreite Korn in einen Tank 13 gefördert wird.

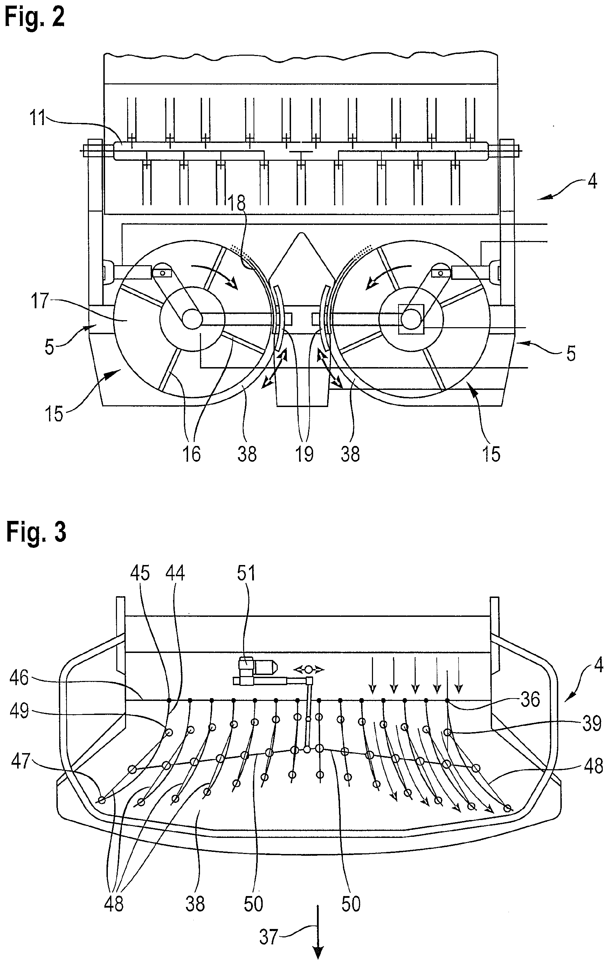

Fig. 2 zeigt die Verteileinrichtung 4 und den Häcksler 11 in einer schematischen Draufsicht. Die zwei Wurfgebläse 5 der Verteileinrichtung 4 umfassen jeweils eine von einem Motor 14 (siehe Fig. 1) und einen um eine im Wesentlichen vertikale Achse drehangetriebenen Rotor 15 mit mehreren radial orientierten Schaufeln 16, die von einer kreisrunden Grundplatte 17 aufragen. Die Grundplatten 17 sind auf einem Teil ihres Umfangs von starren Wänden 18 bzw. von einer Wand 19, die um die Achse des Rotors 15 schwenkbar ist und so einen beweglichen Streugutauslass 38 begrenzt. Streugut aus dem Häcksler 11, das auf die Grundplatten 17 der Rotoren 15 gelangt, wird durch Zentrifugalkraft gegen die Wände 18 bzw. 19 gedrückt und fortgeschleudert, sobald es die Wände 18, 19 hinter sich gelassen und den Streugutauslass 38 erreicht hat. So ist die Richtungsverteilung, mit der eines der Wurfgebläse 5 das Streugut zu einem gegebenen Zeitpunkt fortschleudert, durch die Stellung der schwenkbaren Wände 19 zu diesem Zeitpunkt bestimmt und einigermaßen eng gebündelt, so dass der Gesamtheit des von dem Wurfgebläse 5 zu diesem Zeitpunkt ausgestoßenen Streugut eine momentane Ausstoßrichtung zugeordnet werden kann. Um das Streugut auf einem geraden Streifen hinter dem Mähdrescher zu verteilen, während dieser geradeaus fährt, werden die schwenkbaren Wände 19 fortlaufend hin und her geschwenkt, so dass die momentane Ausstoßrichtung eines jeden Wurfgebläses, d.h. die Richtung des über den gesamten Streugutstrom integrierten Impulses der Streugutpartikel, um eine mittlere Ausstoßrichtung pendelt. Die Breite des dabei entstehenden Streifens aus Streugut hängt ab von den Richtungen, in die momentan das Streugut ausgestoßen wird, also von der Schwenkbewegungsfreiheit der schwenkbaren Wände 19, und von der Geschwindigkeit, mit der die Streugutpartikel die Verteileinrichtung 4 verlassen. Diese ist beeinflussbar über die Drehzahl der Rotoren 15.

Im hier betrachteten Beispiel steuert eine Steuereinheit 20 die Wurfgebläse 5 anhand von Messwerten eines Schichtdickensensors 21, der am Schneidwerk 3, oder wie hier gezeigt, am Schrägförderer 6 angeordnet sein kann, und anhand einer vom Fahrer an einem Regler 22 vorgenommenen Eingabe. Wenn d die vom Sensor 21 erfasste Schichtdicke ist, dann regelt die Steuereinheit 20 die Drehzahl $\omega$ gemäß

$$\omega = a \, f(d) \hspace{4cm} (1)$$

wobei a ein vom Fahrer über den Regler 22 eingestellter Gewichtungsfaktor ist und f eine abnehmende Funktion der Schichtdicke d ist, die empirisch optimiert ist, um den oben erläuterten Unterstützungseffekt durch den Luftstrom am Ausgang der Wurfgebläse 5 zu kompensieren und eine von der Schichtdicke d unabhängige Flugweite der ausgestoßenen Streugutpartikel zu gewährleisten.

Alternativ könnte bei abnehmender Schichtdicke d auch ein größerer Schwenkbewegungsbereich der schwenkbaren Wände 19 eingestellt werde, um die verminderte Flugweite durch eine stärkere Auffächerung des Streugutstroms auszugleichen.

Einer Alternative zufolge empfängt die Steuereinheit 20 die Druckmesswerte der Sensoren 40. Diese setzen sich zusammen aus Beiträgen, die auf das Gewicht des Schneidwerks 3 zurückgehen, und solchen, die auf das Gewicht des Ernteguts im Schneidwerk zurückgehen. Letztere sind direkt proportional zum Massenstrom des Ernteguts durch die Verarbeitungsstrecke. Deswegen ist die Steuereinheit in Kenntnis des Gewichts des Schneidwerks 3 in der Lage, den Massenstrom auch aus den Druckmesswerten der Sensoren 40 zu berechnen.

Einer weiteren Alternative zufolge ermittelt die Steuereinheit 20 die Leistung der Motoren 14, z.B. mittels Sensoren zum Messen von Drehzahl und Drehmoment oder Stromaufnahme der Motoren 14, und setzt diese in Beziehung zur Drehzahl $\omega$. Da die Drehzahl die Geschwindigkeit bestimmt, mit der die Streugutpartikel die Verteileinrichtung 4 verlassen, muss bei gegebener Drehzahl die Leistungsaufnahme der Motoren 14 proportional zum Massendurchsatz der Verteileinrichtung 4 sein, so dass die Steuereinheit durch Messen von Drehzahl und Leistung auf den Massendurchsatz rückschließen kann.

Denkbar ist auch, die Leistung eines Motors des Häckslers 11 zu erfassen, um den Massendurchsatz der Verteileinrichtung abzuschätzen. Der Zusammenhang zwischen dieser Leistung und dem Massendurchsatz ist zwar je nach Art des Ernteguts 9 unterschiedlich, doch wird dieser Unterschied automatisch berücksichtigt, wenn der Fahrer den Gewichtungsfaktor a anpasst.

Die Steuereinheit 20 kann ferner mit einem Navigationssignalempfänger 55, z.B. einem GPS-Empfänger, zur Ermittlung der geographischen Position des Mähdreschers 1 und mit einer erfindungsgemäßen Kamera 41 verbunden sein, die auf das einzubringende Erntegut 9 vor dem Schneidwerk 3 ausgerichtet ist.

Fig. 3 zeigt eine an den Häcksler anschließende Ablenkstufe einer Verteileinrichtung alternativer Bauart. In einem sich zum Streugutauslass 38 hin verbreiternden Gehäuse sind mehrere Strömungsleitplatten 44 divergierend angeordnet, um einen vom Häcksler kommenden, rein entgegen der Fahrtrichtung des Mähdreschers orientierten Strom von Streugut seitwärts aufzufächern. Bei dieser Ablenkstufe ist es nicht nötig, fortlaufend Elemente zu verstellen, um bei Geradeausfahrt einen geraden Streugutstreifen zu erzeugen, d. h. die mittlere Ausstoßrichtung, in Fig. 3 dargestellt durch einen Vektor 37, der Verteileinrichtung ist gleich der momentanen Ausstoßrichtung. Sie ist hier entgegengesetzt zur Fahrtrichtung orientiert.

Dem Häcksler zugewandte Enden 45 der flexibel biegsamen Strömungsleitplatten 44 sind an einer Schiene 46 gleichmäßig beabstandet befestigt. Am dem Streugutauslass 38 zugewandten Ende 47 jeder Strömungsleitplatte 44 greift ein Lenker 48 an. Häckslerseitige Enden 49 der Lenker 48 sind am Gehäuse der Verteileinrichtung 4 schwenkbar befestigt. Untereinander sind die Lenker 48 durch in etwa mittig an ihnen angreifende Stellhebel 50 gekoppelt. Die Stellhebel 50 sind ihrerseits an einen Hydraulikzylinder oder einen anderen geeigneten Stellantrieb 51 gekoppelt und durch diesen quer zur Fahrtrichtung verstellbar. Anhand der Fig. 3 ist leicht nachvollziehbar, dass eine Verlagerung der Stellhebel 50 aus der gezeigten symmetrischen Stellung heraus z.B. nach links die Krümmung der Strömungsleitplatten 44 in der rechten Hälfte der Verteileinrichtung verstärkt und sie in der linken Hälfte verringert, so dass die mittlere Ausstoßrichtung 37 aus der gezeigten, zur Fahrtrichtung entgegengesetzten Orientierung nach rechts schwenkt.

Einer nicht eigens in einer Figur dargestellten, abgewandelten Ausgestaltung zufolge umfasst eine Verteileinrichtung zwei Stellantriebe entsprechend dem Stellantrieb 51, von denen einer den Stellhebel 50 links einer in Fig. 3 gezeichneten Längsmittelebene des Mähdreschers oder der Verteileinrichtung und der andere den Stellhebel 50 rechts dieser Längsmittelebene steuert. Indem die Stellantriebe unabhängig voneinander betätigt werden, ist die Ablenkung und Auffächerung des Streuguts rechts der Längsmittelebene unabhängig von Ablenkung und Auffächerung auf der linken Seite steuerbar, und die Rückseite der Verteileinrichtung kann als zwei Streugutauslässe 38 auf verschiedenen Seiten der Längsmittelebene aufweisend angesehen werden, wobei über den Stellhebel 50 die Ausstoßrichtung des Streuguts am einen Auslass 38 unabhängig von der Auslassrichtung am anderen Auslass 38 steuerbar ist.

Um bei der Verteileinrichtung der Fig. 3 oder ihrer oben beschriebenen abgewandelten Ausgestaltung nicht nur die Ausstoßrichtung 37, sondern auch die Wurfweite des Streuguts - und damit die Breite eines hinter der Verteileinrichtung 4 gebildeten Streugutstreifens zu variieren, kann auch hier Geschwindigkeit, mit der die Streugutpartikel die Verteileinrichtung 4 verlassen, gesteuert werden, z.B. über die Drehzahl des Häckslers, der das Streugut nicht nur zerkleinert, sondern ihm auch die nötige kinetische Energie zum Durchlaufen der Ablenkstufe verleiht, oder über die Leistung eines Gebläses, das einen den Durchgang des Streuguts durch die Ablenkstufe unterstützenden Luftstrom antreibt.

Eine andere Möglichkeit, die Breite des Streugutstreifens zu steuern, ist, die Schiene 46 mittels eines weiteren Stellantriebs in Fahrtrichtung verstellbar zu machen und die Enden 47 der Strömungsleitplatten 44 in ihrer Längsrichtung verschiebbar mit den Lenkern 48 zu verbinden. Wird z.B. die Schiene 46 aus der gezeigten Stellung entgegen der Fahrtrichtung verschoben, so nimmt die Divergenz der Strömungsleitplatten 44 zu, und das Streugut wird stärker seitwärts abgelenkt; die Breite des Streugutstreifens nimmt zu.

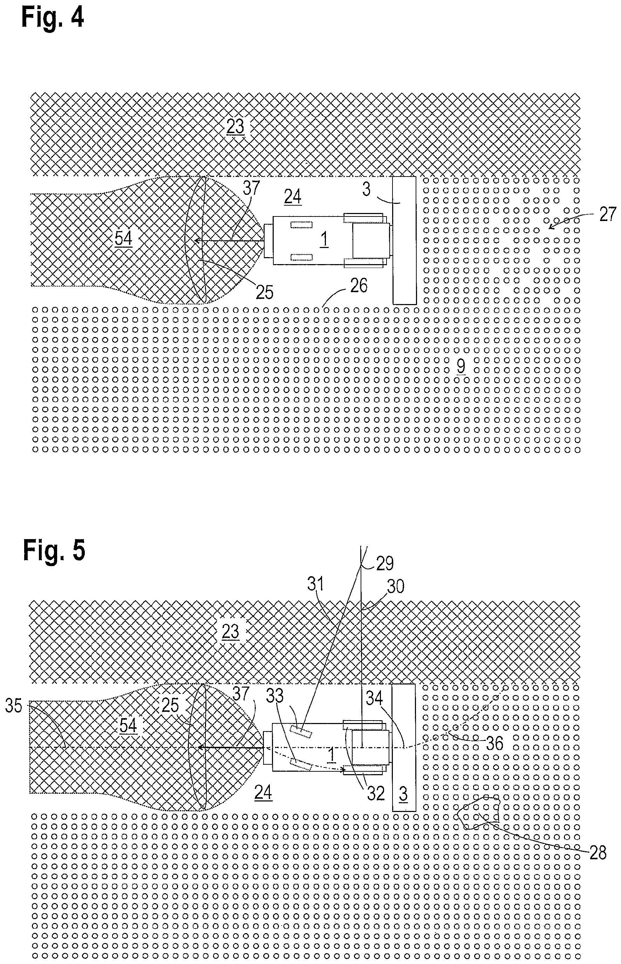

Fig. 4 zeigt den Mähdrescher 1 in einer schematischen Draufsicht beim Abernten einer Feldfläche. Kleine Kreise im unteren und im rechten Teil der Figur symbolisieren den noch unbearbeiteten Bestand des Ernteguts 9. Einen oberen Bereich der Figur bildet ein bereits abgeernteter und mit Streugut, symbolisiert durch eine Kreuz- und Querschraffur, gleichmäßig bedeckter Streifen 23 der Feldfläche. Der Mähdrescher 1 ist im Begriff, einen daran angrenzenden Streifen 24 zu bearbeiten. Der Strom des Streuguts breitet sich von der Verteileinrichtung am Heck des Mähdreschers 1 aus und landet auf der Feldfläche in einem hier sichelförmig dargestellten Landebereich 25. Dessen Breite quer zur Fahrtrichtung des Mähdreschers 1 ist bestimmt durch die Schwenkamplitude der (in Fig. 4 nicht dargestellten) schwenkbaren Wände 19 und die Drehzahl der Rotoren 15. In dem Maße, wie sich der Landebereich 25 über die Feldfläche bewegt, entsteht hinter dem Mähdrescher 1 ein Streugutstreifen 54.

In der dargestellten Position des Mähdreschers 1 ist die Breite des Landebereichs 25 exakt an die Breite des Schneidwerks 3 angepasst, so dass die Breite des Streugutstreifens 54 mit der des abgeernteten Streifens 24 übereinstimmt. Wäre die Drehzahl der Rotoren 15 höher, dann würde das Streugut weiter fliegen und der Landebereich 25 wäre entsprechend größer, so dass jeweils Teile von ihm sich auf dem Streifen 23 bzw. in den Bestand des Ernteguts 9 hinein erstrecken würden. Entsprechend wäre bei zu geringer Drehzahl der Rotoren der Landebereich 25 kleiner, so dass der resultierende Streugutstreifen 54, wie am linken Rand der Figur gezeigt, den Streifen 24 nicht auf seiner gesamten Breite abdeckt.

In der in Fig. 4 gezeigten Situation hat der Fahrer dies vor kurzem erkannt und durch Nachführen des Reglers 22, d.h. Heraufsetzen des Gewichtungsfaktors a, die Breite des Landebereichs 25 in Übereinstimmung mit der Breite des Schneidwerks 3 gebracht.

Wenn der Mähdrescher 1 in einem Bereich mit verminderter Dichte des Ernteguts wie etwa den Bereich 27 in Fig. 4 einfährt, dann führt dies zu einer Abnahme der vom Sensor 21 erfassten Schichtdicke d. Bis das vom Sensor 21 erfasste Erntegut den Mähdrescher 1 durchlaufen hat und entsprechend auch der Massenstrom an der Verteileinrichtung 4 abnimmt, verstreichen einige Sekunden. Die Steuereinheit 20 wartet daher bei Erfassung einer Änderung der Schichtdicke d eine entsprechende Zahl von Sekunden ab, bevor sie anhand der obigen Formel (1) die Drehzahl $\omega$ der Rotoren 15 anpasst. So bleibt die Flugweite des Streuguts trotz schwankender Dichte des Pflanzenbestands konstant, die Breite des Landebereichs 25 ändert sich nicht, und der Streifen 24 wird flächendeckend bestreut, ohne dass nennenswert Streugut auf den Nachbarstreifen 23 oder in den Bestand gelangt.

Fig. 5 zeigt den Mähdrescher 1 erneut in einer Draufsicht entsprechend der Fig. 4, wobei diesmal angenommen ist, dass sich vor dem Mähdrescher 1 ein Hindernis 28 befindet. Ein solches Hindernis kann z.B. ein Findling, ein nicht flüchtendes Tier, aber auch ein zur bisherigen Fahrtrichtung des Mähdreschers 1 nicht paralleler Rand der Feldfläche sein. Um einen Zusammenstoß bzw. ein Überfahren des Hindernisses 28 zu vermeiden, muss der Mähdrescher 1 eine Kurve, hier eine Linkskurve, fahren. Den Mittelpunkt 29 dieser Kurve bildet der Kreuzungspunkt zwischen zwei Achslinien 30, 31, um die die nicht lenkbaren Vorderräder 32 bzw. die lenkbaren Hinterräder 33 des Mähdreschers 1 rotieren.

Der Mittelpunkt 34 des Schneidwerks 3 hat sich bis zum in Fig. 5 dargestellten Zeitpunkt auf einer geraden Bahn 35 bewegt. Wenn der Einfachheit halber angenommen wird, dass das Einschlagen der Hinterräder 33 abrupt zum dargestellten Zeitpunkt erfolgt, dann bewegt sich der Mittelpunkt 34 von dann an auf einem Kreisbogen 36.

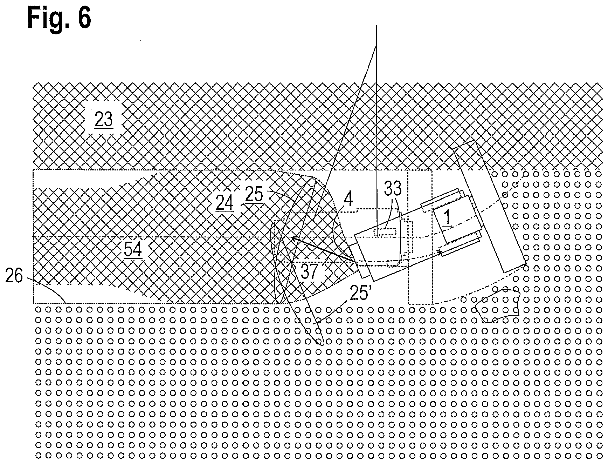

Fig. 6 zeigt den Mähdrescher 1 kurz darauf. Das Heck des Mähdreschers 1 und mit ihm die Verteileinrichtung 4 ist bezogen auf die Fahrtrichtung nach rechts ausgeschwenkt und befindet sich nun deutlich näher an der Kante 26 des Bestands als an der Grenze zum Streifen 23. Um dennoch den Streugutstreifen 54 kongruent zum Streifen 24 auszubringen und zu verhindern, dass Streugut in den Bestand geworfen wird, muss die mittlere Ausstoßrichtung des Streuguts angepasst werden. Während in Fig. 4 und 5 die mittlere Ausstoßrichtung, jeweils dargestellt durch einen Vektor 37, entgegengesetzt zur Fahrtrichtung senkrecht vom Heck des Mähdreschers 1 absteht, würde eine solche Ausrichtung im Falle der Fig. 6, wie anhand des dann geltenden Landebereichs 25' zu erkennen, dazu führen, dass ein großer Teil des Streuguts in den Bestand jenseits der Kante 26 geworfen wird. Um dies zu vermeiden, ist es notwendig, die mittlere Ausstoßrichtung 37 zum Kurvenmittelpunkt 29 hin zu schwenken, so dass der Landebereich 25 weiterhin auf dem Streifen 24 liegt. Eine solche Anpassung der mittleren Ausstoßrichtung könnte allgemein durch Drehen der Verteileinrichtung 4 als Ganzes stattfinden; im hier betrachteten Fall der aus zwei Wurfgebläsen 5 mit schwenkbaren Wänden 18 gebildeten Verteileinrichtung kann die Steuereinheit 20 die mittlere Ausstoßrichtung 37 auch durch Verändern der Winkel, zwischen denen die Wände 18 hin und her schwenken, nachführen.

Die Nachführung erfolgt jeweils mit zeitlicher Verzögerung gegenüber dem sie auslösenden Lenkeinschlag. Zum in Fig. 5 gezeigten Zeitpunkt findet zwar der Lenkeinschlag der Hinterräder 33 statt, doch setzt eine Änderung der Fahrtrichtung des Mähdreschers 1 damit erst allmählich ein. Während dieser beginnt, entlang des Kreisbogens 36 zu fahren, liegt der Landebereich 25 noch auf der zuvor befahrenen geradlinigen Bahn 35, und in dem Maße, in dem der Mähdrescher 1 seine Fahrtrichtung ändert, wird auch die mittlere Ausstoßrichtung 37 kontinuierlich zum Kreuzungspunkt 29 hin geschwenkt. Sie erreicht erst dann einen stationären Wert, wenn auch der Landebereich 25 die geradlinige Bahn 35 hinter sich gelassen und den Kreisbogen 36 erreicht hat. Die Zeitspanne, innerhalb derer die Steuereinheit 20 die mittlere Ausstoßrichtung 37 einem Lenkeinschlag nachführt, sollte demnach der Geschwindigkeit des Mähdreschers 1, dividiert durch den Abstand zwischen Schneidwerk 3 und Landebereich 25, entsprechen.

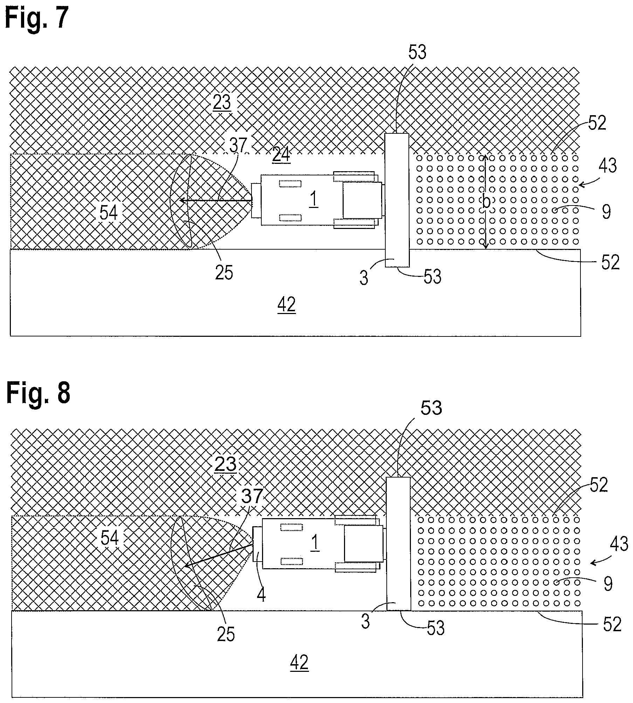

Fig. 7 zeigt den Mähdrescher 1 beim Bearbeiten eines Reststreifens 43 von Erntegut 9 unmittelbar am Rand der Feldfläche, neben einem Fahrweg 42. Die Breite dieses Reststreifens 43 ist geringer als die des Schneidwerks 3. Würde man diesen Reststreifen 43 mit denselben Einstellungen der Steuerschaltung 20 wie oben mit Bezug auf Fig. 4 beschrieben bearbeiten, dann würde die Steuerschaltung 20 anhand der vom Schichtdickensensor 21 und/oder den Drucksensoren 40 gelieferten Messwerte erkennen, dass der Massenstrom des Ernteguts im Mähdrescher 1 kleiner ist als beim Abernten eines Streifens in der Breite des Schneidwerks, und würde durch Heraufsetzen der Ausstoßgeschwindigkeit des Streuguts und/oder der Schwenkamplitude der Wände 19 bzw. der Divergenz der Strömungsleitplatten 44 versuchen, den Streugutstreifen 54 weiterhin in der Breite des Schneidwerks 3 zu erzeugen. Wenn der Mähdrescher 1 den in Fig. 7 gezeigten Weg fährt, bei dem ein mittiger Abschnitt des Schneidwerks das Erntegut 9 aufnimmt und beiderseits dieses mittigen Abschnitts zwischen den Bestandskanten 52 des Restreifens 43 und den seitlichen Kanten 53 des Schneidwerks 3 äußere Abschnitte des Schneidwerks 3 unausgelastet bleiben, dann hätte diese Art der Steuerung zur Folge, dass ein Teil des ausgebrachten Streuguts auf dem Fahrweg 42 und ein anderer auf dem bereits zuvor abgeernteten Streifen 23 landet. Dies kann der Fahrer vermeiden, indem er am Regler 22 den Gewichtungsfaktor a heruntersetzt, so dass die Breite des Landebereichs 25 hinter dem Mähdrescher mit der des Reststreifens 43 übereinstimmt. Diese Möglichkeit ist allerdings nicht sonderlich komfortabel, denn zum einen muss der Mähdrescher 1 den Reststreifen 43 exakt mittig anfahren, damit das Streugut auf der zuvor abgeernteten Fläche landet, was z.B. aufgrund von Hindernissen auf dem Fahrweg 42 unmöglich sein kann. Zum anderen muss der Gewichtungsfaktor a spätestens dann von neuem angepasst werden, wenn mit dem Bearbeiten einer neuen Feldfläche begonnen wird, und falls die Breite b des Restreifens 43 variiert, z.B. weil der Feldrand nicht exakt parallel zum zuvor abgeernteten Streifen 23 ist, kann schon während des Abherntens des Reststreifens 43 eine Anpassung nötig werden. Da der Fahrer die Breite b des Reststreifens 43 ohnehin erfassen und an einem Regler des Mähdreschers einstellen muss, um diesem eine korrekte Abschätzung der bearbeiteten Fläche zu ermöglichen, kann dieser Wert genutzt werden, um die Drehzahl $\omega$ in Verallgemeinerung der obigen Formel (1) nach der Formel

$$\omega = a \ f(d)g(b) \tag{2}$$

zu steuern, wobei g eine anwachsende Funktion der Breite b ist, die maximal den Wert 1 erreicht, wenn b gleich der Breite des Schneidwerks 3 ist und empirisch ermittelt sein kann.

Einer Weiterentwicklung zufolge kann die Steuereinheit 20 die Breite b selbsttätig aus von der Kamera 41 gelieferten Bildern ermitteln und je nach Bauart der Verteileinrichtung die Drehzahl bzw. die Ausstoßgeschwindigkeit des Streuguts und/oder die Schwenkamplitude der Wände 19 bzw. die Divergenz der Strömungsleitplatten 44 dieser Breite b entsprechend steuern. So kann eine genaue Anpassung der Breite des Streugutstreifens 54 an die Breite des Reststreifens 43 auch dann gewährleistet werden, wenn die Breite des Reststreifens 43 über dessen Länge hinweg variiert.

Wenn die Koordinaten der abzuerntenden Feldfläche der Steuereinheit 20 mit ausreichender Genauigkeit bekannt sind, kann alternativ der Navigationssignalempfänger 55 genutzt werden, um den vom Mähdrescher 1 beim Beernten der Feldfläche zurückgelegten Weg zu verfolgen, daraus die Breite b des noch zu beerntenden Reststreifens 43 zu berechnen und die Drehzahl $\omega$ entsprechend Formel (2) passend zu wählen.

Um Hindernissen auf dem Fahrweg 42 auszuweichen, kann es notwendig sein, den Mähdrescher 1 wie in Fig. 8 gezeigt so zu fahren, dass eine Kante des Schneidwerks 3 mit der dem Fahrweg 42 zugewandten Kante des Reststreifens 43 fluchtet.

Einer Ausgestaltung, die nicht Gegenstand der beanspruchten Erfindung ist, zufolge erkennt die Steuereinheit 20 diese Situation anhand eines Vergleichs der von den beiden Drucksensoren 40 gelieferten Messwerte. In der in Fig. 8 gezeigten Situation ist die rechte Hälfte des Schneidwerks 3 stärker mit Erntegut beladen als die linke, und dementsprechend ist auch der vom rechten Sensor 40 erfasste Druck höher als der vom linken Sensor 40 erfasst. Anhand dieser Druckdifferenz schätzt die Steuereinheit den Versatz des Mähdreschers 1 relativ zum Reststreifen 43 ab und passt die mittlere Ausstoßrichtung 37 der Verteileinrichtung 4 an. Diese Anpassung kann eine kontinuierliche Funktion der Druckdifferenz sein; einer zweckmäßigen Vereinfachung zufolge unterscheidet die Steuereinheit 2020 nur zwischen drei diskreten Einstellungen der Ausstoßrichtung 37: senkrecht nach hinten, wie in Fig. 7 gezeigt, wenn der Betrag der Druckdifferenz unter einem Grenzwert liegt, nach rechts, so dass ein rechter Rand des Landebereichs 25 mit der rechten Kante 53 des Schneidwerks 3 fluchtet, wie in Fig. 8 gezeigt, wenn der vom rechten Sensor 40 erfasste Druck den vom linken Sensor 40 erfassten um mehr als den Grenzwert übersteigt, und nach links, so dass ein linker Rand des Landebereichs 25 mit der linken Kante 53 des Schneidwerks 3 fluchtet, wenn der vom linken Sensor 40 erfasste Druck den vom rechten Sensor 40 erfassten um mehr als den Grenzwert übersteigt.

Einer erfindungsgemäßen Ausgestaltung der Erfindung zufolge erkennt die Steuereinheit 20 einen Versatz zwischen dem Mähdrescher 1 und dem Reststreifen 43 anhand der von der Kamera 41 gelieferten Bilder und passt die mittlere Ausstoßrichtung 37 an diesen Versatz an.

Eine ähnliche Wirkung wie durch die Kamera 41 ist auch mit Hilfe des Navigationssignalempfängers 55 erreichbar: anhand bekannter Koordinaten des Randes der Feldfläche und des unmittelbar vor dem Restreifen 43 abgemähten Streifens 23 berechnet die Steuereinheit die Koordinaten des Reststreifens 43. Während der Mähdrescher den Reststreifen 43 bearbeitet, berechnet sie die Koordinaten des Mähdreschers 1 und einen sich ggf. aus diesen ergebenden seitlichen Versatz zwischen dem Mähdrescher 1 und dem Restreifen 43, und korrigiert dementsprechend die mittlere Ausstoßrichtung 37 und die Größe des Landebereichs 25, so dass das Streugut genau innerhalb der Grenzen des Reststreifens 43 zu Boden fällt.

**Bezugszeichen**

1    Mähdrescher
2    Aufnahmeeinrichtung
3    Schneidwerk
4    Verteileinrichtung
5    Wurfgebläse
6    Schrägförderer
7    Drescheinrichtung
8    Axialabscheider
9    Erntegut
10   Reinigungseinrichtung
11   Häcksler

| | |
|---|---|
| 12 | Gebläse |
| 13 | Tank |
| 14 | Motor |
| 15 | Rotor |
| 16 | Schaufel |
| 17 | Grundplatte |
| 18 | Wand |
| 19 | Wand |
| 20 | Steuereinheit |
| 21 | Schichtdickensensor |
| 22 | Regler |
| 23 | Streifen |
| 24 | Streifen |
| 25 | Landebereich |
| 26 | Kante |
| 27 | Bereich |
| 28 | Hindernis |
| 29 | Mittelpunkt |
| 30 | Achslinie |
| 31 | Achslinie |
| 32 | Vorderrad |
| 33 | Hinterrad |
| 34 | Mittelpunkt |
| 35 | Bahn |
| 36 | Kreisbogen |
| 37 | mittlere Ausstoßrichtung |
| 38 | Streugutauslass |
| 39 | Hydraulikzylinder |
| 40 | Drucksensor |
| 41 | Kamera |
| 42 | Fahrweg |
| 43 | Reststreifen |
| 44 | Strömungsleitplatte |
| 45 | Ende (der Strömungsleitplatte) |
| 46 | Schiene |
| 47 | Ende (der Strömungsleitplatte) |
| 48 | Lenker |
| 49 | Ende (des Lenkers) |
| 50 | Stellhebel |
| 51 | Stellantrieb |
| 52 | Bestandskante |
| 53 | Kante (des Schneidwerks) |
| 54 | Streugutstreifen |
| 55 | Navigationssignalempfänger |

## Patentansprüche

**1.** Fahrzeug mit einer Aufnahmeeinrichtung (3) für Erntegut und einer Verteileinrichtung (4) zum Verteilen eines von dem Erntegut abgeschiedenen Streugutes während der Fahrt in Form eines Streugutstreifens (54) hinter dem Fahrzeug, wobei die Verteileinrichtung (4) steuerbar ist, um die Lage des Streugutstreifens (54) quer zur Fahrtrichtung zu variieren, wobei es ein Erfassungsmittel zum Erfassen der Verteilung des Ernteguts (9) über die Breite der Aufnahmeeinrichtung (3) aufweist und eine Steuereinheit (20) eingerichtet ist, die Lage des Streugutstreifens (54) anhand der erfassten Verteilung zu steuern, **dadurch gekennzeichnet, dass** das Erfassungsmittel eine auf die Aufnahmeeinrichtung (3) oder Erntegut (9) vor der Aufnahmeeinrichtung (3) ausgerichtete Kamera (41) umfasst

**2.** Fahrzeug nach Anspruch 1, **dadurch gekennzeichnet, dass** das Erfassungsmittel eingerichtet ist, eine Ungleichverteilung des Ernteguts zwischen einer linken und einer rechten Hälfte der Aufnahmeeinrichtung (3) zu erfassen und die Steuereinheit (20) eingerichtet ist, im Falle einer Ungleichverteilung den Streugutstreifen (54) von einer bei Gleichverteilung eingenommenen Position zur Seite der stärker mit Erntegut belasteten Hälfte auszulenken.

3. Fahrzeug nach Anspruch 2, **dadurch gekennzeichnet, dass** die Steuereinheit (20) eingerichtet ist, die Position des Streugutstreifens (54) zwischen drei diskreten Positionen, der bei Gleichverteilung eingenommenen Position und je einer zur linken bzw. zur rechten Seite versetzten Position auszuwählen.

4. Fahrzeug nach Anspruch 2, **dadurch gekennzeichnet, dass** die Steuereinheit (20) eingerichtet ist, die Ungleichverteilung quantitativ zu beurteilen und eine in Abhängigkeit vom Maß der Ungleichverteilung kontinuierlich variable Position des Streugutstreifens (54) zu wählen.

5. Fahrzeug nach einem der vorhergehenden Ansprüche, **dadurch gekennzeichnet, dass** die Steuereinheit (20) eingerichtet ist, die Position des Streugutstreifens (54) unter Beibehaltung seiner Breite zu variieren.

6. Fahrzeug nach einem der vorhergehenden Ansprüche, **dadurch gekennzeichnet, dass** die Steuereinheit (20) eingerichtet ist, wenigstens eine nicht mit einer Kante (53) der Aufnahmeeinrichtung (3) zusammenfallende Bestandskante (52) des Ernteguts (9) in von der Kamera (41) gelieferten Bildern zu identifizieren und einen Rand des Streugutstreifens (54) fluchtend mit dieser Bestandskante (52) zu positionieren.

## Claims

1. A vehicle having a pick-up device (3) for crop material and a distribution device (4) for distributing a spreading material which is separated from the crop material during travel in the form of a spreading material strip (54) behind the vehicle, wherein the distribution device (4) is controllable to vary the position of the spreading material strip (54) transversely relative to the direction of travel, wherein it has a detection means for detecting the distribution of the crop material (9) over the width of the pick-up device (3) and a control unit (20) is adapted to control the position of the spreading material strip (54) on the basis of the detected distribution, **characterised in that** the detection means includes a camera directed on to the pick-up device (3) or crop material (9) in front of the pick-up device (3).

2. A vehicle according to claim 1 **characterised in that** the detection means is adapted to detect an unequal distribution of the crop material between a left-hand and a right-hand half of the pick-up device (3) and the control unit (20) is adapted in the case of an unequal distribution to deflect the spreading material strip (54) from a position adopted when equal distribution applies to the side of the half which is more heavily loaded with crop material.

3. A vehicle according to claim 2 **characterised in that** the control unit (20) is adapted to select the position of the spreading material strip (54) between three discrete positions, the position adopted when equal distribution applies and a respective position displaced to the left-hand and the right-hand side respectively.

4. A vehicle according to claim 2 **characterised in that** the control unit (20) is adapted to quantitatively assess the unequal distribution and to select a position of the scatter material strip, that is continuously variable in dependence on the degree of unequal distribution.

5. A vehicle according to one of the preceding claims **characterised in that** the control unit (20) is adapted to vary the position of the scatter material strip (54) while maintaining its width.

6. A vehicle according to one of the preceding claims **characterised in that** the control unit (20) is adapted to identify at least one crop material stand edge (52) that does not coincide with an edge (53) of the pick-up device (3) in images delivered by the camera (41) and to position an edge of the spreading material strip (54) in alignment with said crop material stand edge (52).

## Revendications

1. Véhicule comprenant un équipement récepteur (3) pour du produit récolté et un équipement d'épandage (4) pour épandre derrière le véhicule, pendant la marche, un produit d'éparpillement séparé du produit récolté sous la forme d'une bande de produit d'éparpillement (54), l'équipement d'épandage (4) étant commandable pour faire varier la position de la bande de produit d'éparpillement (54) transversalement au sens de la marche, ledit véhicule comportant un moyen de détection pour détecter la répartition du produit récolté (9) sur la largeur de l'équipement récepteur (3), et une unité de commande (20) étant agencée pour commander la position de la bande de produit d'éparpillement (54) sur la base de la répartition détectée, **caractérisé en ce que** le moyen de détection est une caméra (41) dirigée sur l'équipement récepteur (3) ou sur le produit récolté (9) devant l'équipement récepteur (3).

2. Véhicule selon la revendication 1, **caractérisé en ce que** le moyen de détection est agencé pour détecter une distribution irrégulière du produit récolté entre une moitié gauche et une moitié droite de l'équipement récepteur (3), et l'unité de commande (20) est agencée pour dévier, en cas de distribution irrégulière, le flux de produit récolté (54) d'une position adoptée en présence d'une distribution régulière vers le côté de la moitié la plus dense en produit récolté.

3. Véhicule selon la revendication 2, **caractérisé en ce que** l'unité de commande (20) est agencée pour sélectionner la position de la bande de produit d'éparpillement (54) entre trois positions discrètes, la position adoptée en présence d'une distribution régulière et des positions décalées respectivement à gauche et à droite.

4. Véhicule selon la revendication 2, **caractérisé en ce que** l'unité de commande (20) est agencée pour évaluer quantitativement la distribution irrégulière et sélectionner une position de la bande de produit d'éparpillement (54) variable en continu en fonction du niveau de distribution irrégulière.

5. Véhicule selon une des revendications précédentes, **caractérisé en ce que** l'unité de commande (20) est agencée pour faire varier la position de la bande de produit d'éparpillement (54) en conservant la largeur de celle-ci.

6. Véhicule selon une des revendications précédentes, **caractérisé en ce que** l'unité de commande (20) est agencée pour identifier, sur des images fournies par la caméra (41), au moins un bord de culture (52) du produit récolté (9) ne coïncidant pas avec un bord (53) de l'équipement récepteur (3) et pour positionner un bord de la bande de produit d'éparpillement (54) en l'alignant avec ce bord de culture (52).

Fig. 1

## Fig. 2

## Fig. 3

## Fig. 4

## Fig. 5

**Fig. 6**

## Fig. 7

## Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10342922 A1
- EP 2382853 A1